# EUROPÄISCHE PATENTSCHRIFT

(11) **EP 3 768 565 B1**
(45) Veröffentlichungstag und Bekanntmachung des Hinweises auf die Patenterteilung: **28.12.2022**
(21) Anmeldenummer: 19712555.2
(22) Anmeldetag: 19.03.2019
(51) Int. Cl.: B61D 3/12

(54) **SCHNITTSTELLE ZUR VERBINDUNG EINES FAHRZEUGAUFBAUS MIT EINEM UNTERGESTELL**
INTERFACE FOR CONNECTING A VEHICLE SUPERSTRUCTURE TO AN UNDERFRAME
INTERFACE POUR RELIER UNE CARROSSERIE DE VÉHICULE À UN CHÂSSIS

(30) Priorität: 21.03.2018 AT 502362018
(43) Veröffentlichungstag der Anmeldung: 27.01.2021
(73) Patentinhaber: Rail Cargo Austria Aktiengesellschaft, 1100 Wien (AT)
(72) Erfinder: GRANER, Gernot, 3800 Göpfritz an der Wild (AT); HERINCS, Philipp, 3430 Tulln an der Donau (AT)
(74) Vertreter: Puchberger & Partner Patentanwälte
(86) Internationale Anmeldenummer: PCT/EP2019/056746
(87) Internationale Veröffentlichungsnummer: WO 2019/179965

(56) Entgegenhaltungen:
- CH-A- 163 168
- DE-A1- 19 507 236
- DE-B- 1 233 002
- DE-C- 743 227
- DE-C1- 3 940 650
- FR-A1- 2 234 167
- FR-A1- 2 250 657
- US-A- 3 260 223
- US-A- 3 762 340
- US-A- 4 597 337
- US-A- 4 864 938
- US-A1- 2009 001 236

## Beschreibung

Die Erfindung betrifft eine Schnittstelle zur Verbindung eines Fahrzeugaufbaus mit einem Untergestell eines Schienenfahrzeugs.

Aus dem Stand der Technik sind Schnittstellen zur lösbaren Verbindung eines Fahrzeugaufbaus, beispielsweise eines Containers, mit einem Untergestell eines, zur Bewegung in einer Fahrtrichtung ausgeführten Schienenfahrzeugs, beispielsweise eines Containertragwagens, bekannt. Derartige Schnittstellen umfassen zumindest ein erstes Koppelelement, das zur Ableitung von im Wesentlichen normal zur Fahrtrichtung des Schienenfahrzeuges verlaufenden Kräften ausgeführt ist. Derartige Koppelelemente sind meist in Form von sogenannten Containerzapfen ausgeführt, auf welche die Container aufgesetzt werden. Diese massiv ausgeführten Containerzapfen sind geeignet, vertikal und quer zur Fahrtrichtung auf den Fahrzeugaufbau wirkende Kräfte effektiv an das Untergestell des Schienenfahrzeugs abzuleiten.

Ein Untergestell für Schienenfahrzeuge mit derartigen Koppelelementen ist beispielsweise in der US 4 961 676 A gezeigt. Die DE 20 2009 004 415 U1 beschreibt einen Plattformwagen für die Beförderung von Gütern ohne Container. Ferner zeigen auch die DE 195 07 236 A1 und die US 2009 001 236 Schnittstellen zur Verbindung eines Fahrzeugaufbaus mit einem Untergestell.

Die mit diesen Schnittstellen verwendbaren Container unterliegen jedoch in der Regel strengen Limitierungen, da die Schnittstellen nicht geeignet sind, Kräfte abzuleiten, die in Fahrtrichtung des Schienenfahrzeuges verlaufen und bei der Zugbildung durch Abrollberge entstehen. Beispielsweise darf das Gewicht eines Containers aus diesem Grund in der Regel einen Wert von 36 Tonnen nicht überschreiten.

Ein weiterer Nachteil besteht darin, dass bei Verwendung herkömmlicher Schnittstellen weder das Untergestell, noch der zu befördernde Fahrzeugaufbau oder Container für einen uneingeschränkten Bahnbetrieb zugelassen werden können, sondern betrieblichen Einschränkungen unterliegen. So kann beispielsweise eine Beschleunigung in Fahrtrichtung von maximal 2g ertragen werden; damit sind diese Containertragwagen nicht geeignet für die Zugbildung über Abrollberge. Auch ein Einsatz der Container im Einzelwagenverkehr ist unter Verwendung der herkömmlichen Schnittstelle aus diesen Gründen nicht zulässig.

Die Aufgabe der Erfindung besteht unter anderem darin, diese und andere Nachteile der herkömmlichen Schnittstellen zu beheben und eine Schnittstelle zu schaffen, die auch die Verwendung schwererer Aufbauten erlaubt und insbesondere den uneingeschränkten Bahnbetrieb der damit ausgestatteten Güterwagen erlaubt.

Diese Aufgabe wird durch eine Schnittstelle nach Anspruch 1 und durch eine Anordnung nach Anspruch 8 gelöst. Dabei ist zusätzlich zum ersten Koppelelement zumindest ein zweites Koppelelement vorgesehen, das zur Ableitung von im Wesentlichen parallel zur Fahrtrichtung verlaufenden Kräften ausgeführt ist.

Das zweite Koppelelement umfasst erfindungsgemäß eine vorzugsweise einstückige Anschlagkonsole mit einer Befestigungsplatte und einer im Wesentlichen 90° dazu orientierten Anschlagplatte, wobei die Befestigungsplatte zur lösbaren Befestigung an der Unterseite des Fahrzeugaufbaus ausgeführt ist, und die Anschlagplatte dazu ausgeführt ist, sich an einem Anschlag eines Querträgers, vorzugsweise eines Hauptquerträgers im Bereich des Fahrgestells des Untergestells, abzustützen. Dadurch wird erreicht, dass der Güterwagen mit dem Aufbau keinen betrieblichen Einschränkungen unterliegt und auch Abrollberge befahren darf. Der Fahrzeugaufbau kann sich in Fahrtrichtung am zweiten Koppelelement am Untergestell abstützen, um die hohen Längsbeschleunigungen, die beim Befahren von Abrollbergen auftreten, zu ertragen. Unabhängig davon werden Kräfte, die normal zur Fahrtrichtung, also vertikal oder quer zur Fahrtrichtung, über das erste Koppelelement, insbesondere die herkömmlichen Containerzapfen, abgeleitet.

Durch eine erfindungsgemäße Ausführung der Anschlagplatte zur Abstützung an einem Hauptquerträger im Bereich des Fahrgestells wird insbesondere eine besonders gute Kraftableitung ermöglicht; ferner entsteht bei der Krafteinleitung durch den besonders kurzen Hebelarm ein besonders geringes Kippmoment.

Erfindungsgemäß kann vorgesehen sein, dass die Anschlagplatte im Wesentlichen in einer Ebene verläuft, die normal zur Fahrtrichtung ausgerichtet ist.

Erfindungsgemäß kann vorgesehen sein, dass das erste Koppelelement einen im Wesentlichen normal zur Fahrtrichtung, vorzugsweise vertikal vom Untergestell nach oben gerichteten Zapfen umfasst. Der Zapfen kann zum Eingriff in eine Ausnehmung an der Unterseite des Fahrzeugaufbaus ausgeführt sein. Derartige Zapfen werden insbesondere als Containerzapfen bezeichnet und müssen eine ausreichende Stabilität aufweisen, um Kräfte quer zur Fahrtrichtung ableiten zu können.

Hingegen müssen die Zapfen nicht dazu ausgeführt sein, Längskräfte in Fahrtrichtung aufzunehmen, da diese Längskräfte erfindungsgemäß durch das zweite Koppelelement aufgenommen werden.

Erfindungsgemäß kann vorgesehen sein, dass das erste Koppelelement, also der Zapfen, an einem Querträger, vorzugsweise an einem Hauptquerträger im Bereich eines Fahrgestells, des Untergestells angeordnet ist. Dadurch wird erreicht, dass insbesondere die vertikalen Kräfte, die auf das erste Koppelelement wirken, effektiv an das Fahrgestell weitergeleitet werden können.

Erfindungsgemäß kann vorgesehen sein, dass die Ausnehmung am Fahrzeugaufbau zur Aufnahme des ersten Koppelelements, insbesondere Zapfens, zumindest in Fahrtrichtung, aber vorzugsweise auch quer zur Fahrtrichtung eine größere Abmessung als der Zapfen selbst aufweist. Dadurch wird im Betrieb sichergestellt, dass zumindest parallel zur Fahrtrichtung, aber gegebenenfalls auch quer zur Fahrtrichtung ein gewisser Bewegungsspielraum, also Spiel, X zur Bewegung des Zapfens in der Ausnehmung verbleibt, und zwar vorzugsweise in Fahrtrichtung, aber auch quer zur Fahrtrichtung.

Das Spiel in Längsrichtung des Fahrzeugs, also parallel zur Fahrtrichtung, ist von besonderer Bedeutung. Diese Dimensionierung der Ausnehmung erleichtert auch das Aufsetzen des Fahrzeugaufbaus auf das Untergestell, und zwar vor allem dann, wenn mehrere erste Koppelelemente vorgesehen sind.

Besonders vorteilhaft hat sich gezeigt, wenn die Ausnehmung zumindest in Fahrtrichtung, aber vorzugsweise auch quer zur Fahrtrichtung, etwa 50% bis 100% größer ist als der Durchmesser des Zapfens.

Sowohl der Zapfen, als auch die Ausnehmung können einen im Wesentlichen kreisförmigen Querschnitt aufweisen.

Erfindungsgemäß ist vorgesehen, dass das zweite Koppelelement eine vorzugsweise einstückige Anschlagkonsole mit einer Befestigungsplatte und einer im Wesentlichen 90° dazu orientierten Anschlagplatte umfasst.

Eine derartige Anschlagkonsole kann über die Befestigungsplatte an der Unterseite des Fahrzeugaufbaus befestigt werden, und mit der um 90° dazu orientierten Anschlagplatte mit dem Untergestell formschlüssig zusammenwirken. Dadurch können Kräfte, die auf den Fahrzeugaufbau in Fahrtrichtung wirken, also insbesondere Kräfte beim Beschleunigen, Abbremsen, oder bei Bergauf- bzw. Bergabfahrten effizient an das Untergestell abgeleitet werden.

Erfindungsgemäß ist vorgesehen, dass die Befestigungsplatte der Anschlagkonsole zur lösbaren Befestigung an der Unterseite des Fahrzeugaufbaus ausgeführt ist, und die Anschlagplatte dazu ausgeführt ist, sich an einem Anschlag des Querträgers, vorzugsweise des Hauptquerträgers im Bereich des Fahrgestells des Untergestells, abzustützen. Jeder Querträger, aber vorzugsweise die Hauptquerträger des Untergestells, die im Bereich der Fahrgestelle angeordnet sind, können einen entsprechenden Anschlag zur formschlüssigen Zusammenwirkung mit der Anschlagplatte der Anschlagkonsole aufweisen.

Die Anschlagkonsole ist dabei zwar mit der Unterseite des Fahrzeugaufbaus, jedoch nicht mit dem Untergestell verbunden, sodass insbesondere Bewegungen in Richtung quer zur Fahrtrichtung, beispielsweise bei Kurvenfahrten, möglich bleiben.

Die Anschlagkonsole kann, je nachdem, wie sie angeordnet ist, sowohl Bewegungen des Fahrzeugaufbaus in Fahrtrichtung, als auch entgegen der Fahrtrichtung, in den Querträger oder Hauptquerträger ableiten.

Erfindungsgemäß kann vorgesehen sein, dass an der Anschlagplatte eine Distanzplatte zur Einstellung eines definierten Abstands Y zwischen der Anschlagkonsole und dem Untergestell angeordnet ist. In der Regel wird zunächst der Fahrzeugaufbau auf das Untergestell aufgesetzt, indem beispielsweise Containerzapfen in dafür vorgesehene Ausnehmungen am Fahrzeugaufbau eingeführt werden. Erst danach werden ein oder mehrere Anschlagkonsolen an der Unterseite des Fahrzeugaufbaus angeschraubt oder auf andere Weise befestigt. Um nun einen definierten Abstand Y zwischen der Anschlagplatte der Anschlagkonsole und dem Anschlag am Querträger oder Hauptquerträger sicherzustellen, besteht die Möglichkeit, an die Anschlagplatte der Anschlagkonsole eine Distanzplatte mit ausgewählter Dicke anzuordnen.

Es kann insbesondere vorgesehen sein, dass die Distanzplatte an der Anschlagplatte der Anschlagkonsole von Seite der Anschlagplatte, oder von Seite der Anschlagkonsole angeschraubt wird.

Im Fall, dass die Distanzplatte an der Anschlagplatte von Seite der Anschlagplatte angeschraubt wird, kann die Distanzplatte nach der Montage der Anschlagkonsole an der Unterseite des Fahrzeugaufbaus in der Regel nicht entfernt werden, ohne auch die Anschlagkonsole zu demontieren.

Erfindungsgemäß kann aber auch vorgesehen sein, dass die Distanzplatte derart an der Anschlagplatte befestigt, insbesondere angeschraubt, angesteckt oder eingeschoben, ist, dass sie auch dann entfernt oder getauscht werden kann, wenn die Anschlagkonsole an der Unterseite des Fahrzeugaufbaus befestigt ist und die Anschlagplatte unmittelbar am Anschlag anliegt.

Dies ist beispielsweise der Fall, wenn die Distanzplatte von Seite der Anschlagkonsole an der Anschlagplatte angeschraubt ist.

Erfindungsgemäß kann vorgesehen sein, dass der Abstand Y zwischen der Anschlagkonsole und dem Untergestell geringer ist als das Spiel X zur Bewegung des Zapfens in der Ausnehmung an der Unterseite des Fahrzeugaufbaus. Dies hat den Vorteil, dass eine Bewegung des Fahrzeugaufbaus in Fahrtrichtung nur innerhalb eines geringen Spielraums Y möglich ist, sodass die Zapfen selbst nicht beansprucht werden. Bevor noch die Zapfen gegen die Ränder der Ausnehmung stoßen könnten, wird die Bewegung des Fahrzeugaufbaus in Fahrtrichtung bzw. entgegen die Fahrtrichtung bereits dadurch gestoppt, dass die Anschlagplatte oder die Distanzplatte der Anschlagkonsole auf den Anschlag des Querträgers oder des Hauptquerträgers trifft und sich dort abstützt.

Erfindungsgemäß kann vorgesehen sein, dass am Querträger oder am Hauptquerträger eine Schulter vorgesehen ist, welche den Anschlag um mehr als den Abstand X + Y überragt, um einer Entfernung des zweiten Koppelelements in vertikaler Richtung entgegenzuwirken.

Diese Schulter kann derart ausgeführt sein, dass sie in vertikaler Richtung oberhalb des Anschlags des Querträgers oder des Hauptquerträgers angeordnet ist. Indem die Schulter den Anschlag um mehr als den Abstand X+Y überragt, kann auch dann wenn der Fahrzeugaufbau so weit wie möglich vom Querträger oder Hauptquerträger weg verschoben ist, der Fahrzeugaufbau bzw. die Anschlagkonsole nicht vertikal nach oben gehoben werden, da die Anschlagplatte oder die Distanzplatte gegen die Schulter treffen würde. Ein Entfernen des Fahrzeugaufbaus vom Untergestell ist somit erst möglich, wenn die Anschlagkonsole demontiert wurde. Dadurch wird ein unabsichtliches Entfernen des Fahrzeugaufbaus verhindert.

Erfindungsgemäß kann vorgesehen sein, dass an der Befestigungsplatte ein Formteil zum Einsetzen in eine Ausnehmung an der Unterseite des Fahrzeugaufbaus zum Positionieren der Anschlagkonsole vorgesehen ist. Ein derartiges Formteil kann beispielsweise eine erhabene rechteckige Form aufweisen.

Erfindungsgemäß kann vorgesehen sein, dass die Befestigungsplatte und die Anschlagplatte der Anschlagkonsole über eine Vielzahl, vorzugsweise drei, im Wesentlichen rechtwinkelig geformte Bleche, Lamellen oder Rippen miteinander verbunden sind. Dadurch wird eine hohe Stabilität und effiziente Kraftableitung bei gleichzeitig niedrigem Gewicht ermöglicht.

Die Anschlagkonsole, Anschlagplatte, Befestigungsplatte und Distanzplatte können vorzugsweise aus Eisen oder Stahl gefertigt sein oder diese Materialien umfassen.

Die Erfindung erstreckt sich auch auf eine Anordnung umfassend einen Fahrzeugaufbau, ein Untergestell mit zumindest einem Fahrgestell, und zumindest eine erfindungsgemäße Schnittstelle mit einem ersten Koppelelement und einem zweiten Koppelelement.

Erfindungsgemäß kann vorgesehen sein, dass die Anordnung eine Vielzahl von Schnittstellen umfasst. Die Schnittstellen können jeweils im Bereich eines Fahrgestells des Untergestells angeordnet sein, um die auftretenden Kräfte effizient an das Fahrgestell ableiten zu können.

Erfindungsgemäß kann vorgesehen sein, dass das Untergestell zwei Hauptquerträger mit jeweils zwei Fahrgestellen umfasst, wobei an jedem Hauptquerträger jeweils im Bereich des Fahrgestells eine erfindungsgemäße Schnittstelle angeordnet ist.

Weitere erfindungsgemäße Merkmale ergeben sich aus den Ansprüchen, der Beschreibung und den Figuren. Die Erfindung wird im Folgenden anhand eines nicht ausschließlichen Ausführungsbeispiels näher erläutert. Es zeigen
Fig. 1: eine schematische dreidimensionale Ansicht eines Untergestells eines Schienenfahrzeugs;
Fig. 2: eine schematische Seitenansicht der erfindungsgemäßen Schnittstelle;
Fig. 3: eine schematische dreidimensionale Ansicht des erfindungsgemäßen zweiten Koppelelements;
Fig. 4: eine schematische Ansicht eines Fahrzeugaufbaus mit einem Untergestell von vorne;
Fig. 5: eine schematische Ansicht des Details B aus Fig. 2;
Fig. 6: eine schematische Ansicht des Schnitts A-A aus Fig. 4;
Fig. 7a - 7d: schematische Ansichten des erfindungsgemäßen zweiten Koppelelements.

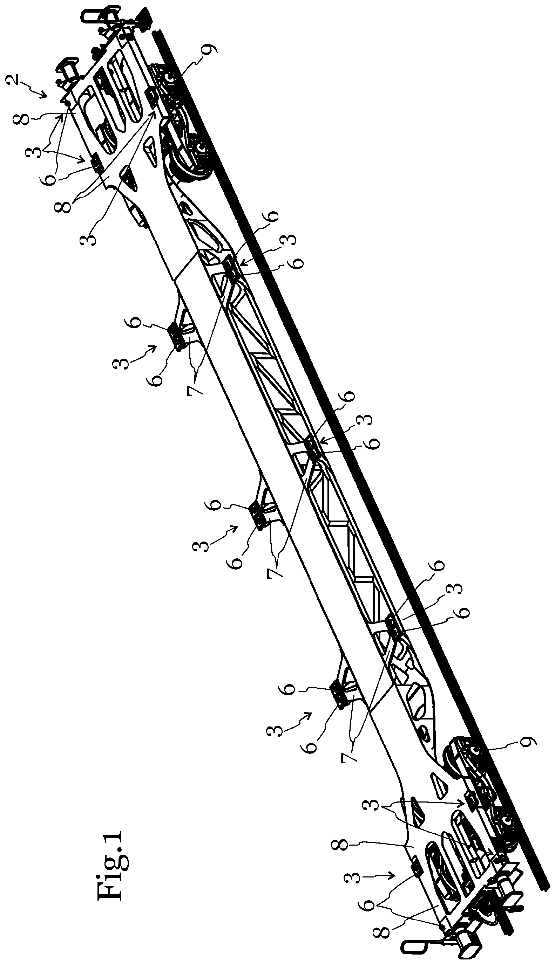

Fig. 1 zeigt eine schematische dreidimensionale Ansicht eines Untergestells 2 eines Schienenfahrzeugs. Das Schienenfahrzeug ist zur Bewegung in einer Fahrtrichtung entlang der schematisch dargestellten Schienen ausgeführt. Das Untergestell 2 verfügt über eine Vielzahl erster Koppelelemente 3, die Zapfen 6 umfassen. In diesem Ausführungsbeispiel verfügt das Untergestell 2 über zwei Fahrgestelle 9. Im Bereich jedes Fahrgestells 9 befinden sich jeweils zwei Hauptquerträger 8, welche den Großteil der auf das Untergestell 2 einwirkenden Kräfte an die Fahrgestelle 9 weiterleiten. Die ersten Koppelelemente 3 mit ihren Zapfen 6 sind jeweils paarweise an den Hauptquerträgern 8 und weiteren Querträgern 7 angeordnet. Die zweiten Koppelelemente 4 sind in dieser schematischen Ansicht nicht dargestellt.

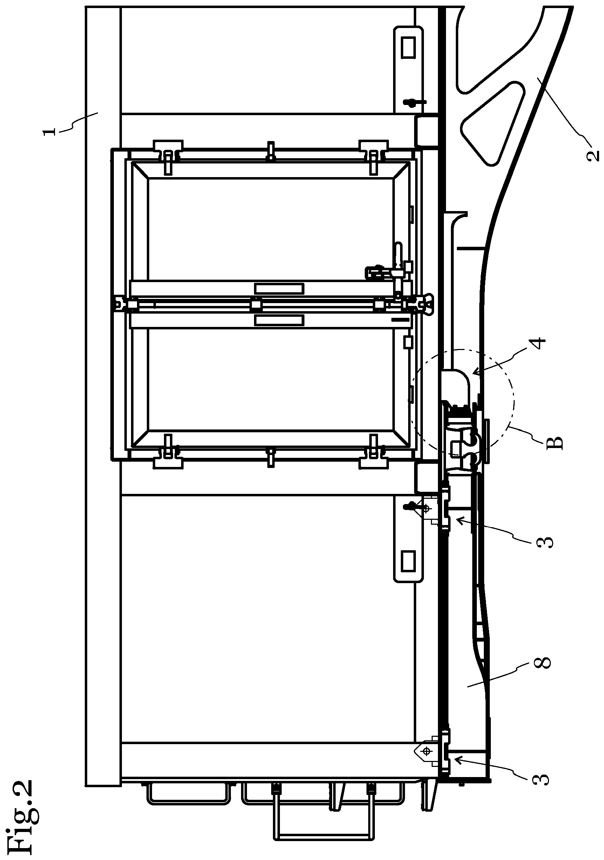

Fig. 2 zeigt eine schematische Seitenansicht der erfindungsgemäßen Schnittstelle. In diesem Ausführungsbeispiel ist der Fahrzeugaufbau 1 auf das Untergestell 2 aufgesetzt. Die Position der ersten Koppelelemente 3 mit ihren Zapfen 6, welche im Bereich eines Hauptquerträgers 8 angeordnet sind, sind lediglich schematisch angedeutet, da die Zapfen 6 in dieser Seitenansicht durch die Seitenwand des Fahrzeugaufbaus 1 verdeckt und somit nicht sichtbar sind. Die ersten Koppelelemente 3 leiten über die Zapfen 6 vertikale Kräfte des Fahrzeugaufbaus 1 an den Hauptquerträger 8 und in Folge an das (nicht dargestellte) Fahrgestell 9 weiter.

Ebenfalls im Bereich des Hauptquerträgers 8 befinden sich die zweiten Koppelelemente 4, welche in Form eines 90°-Winkels Längskräfte des Fahrzeugaufbaus an den Hauptquerträger 8 weiterleiten.

Um Längskräfte des Fahrzeugaufbaus 1 sowohl in Fahrtrichtung, als auch entgegengesetzt zur Fahrtrichtung ableiten zu können, kann vorgesehen sein, dass auch am anderen Ende des Untergestells 2 eine entsprechende Schnittstelle mit ersten Koppelelementen 3 und zweiten Koppelelementen 4 vorgesehen sind.

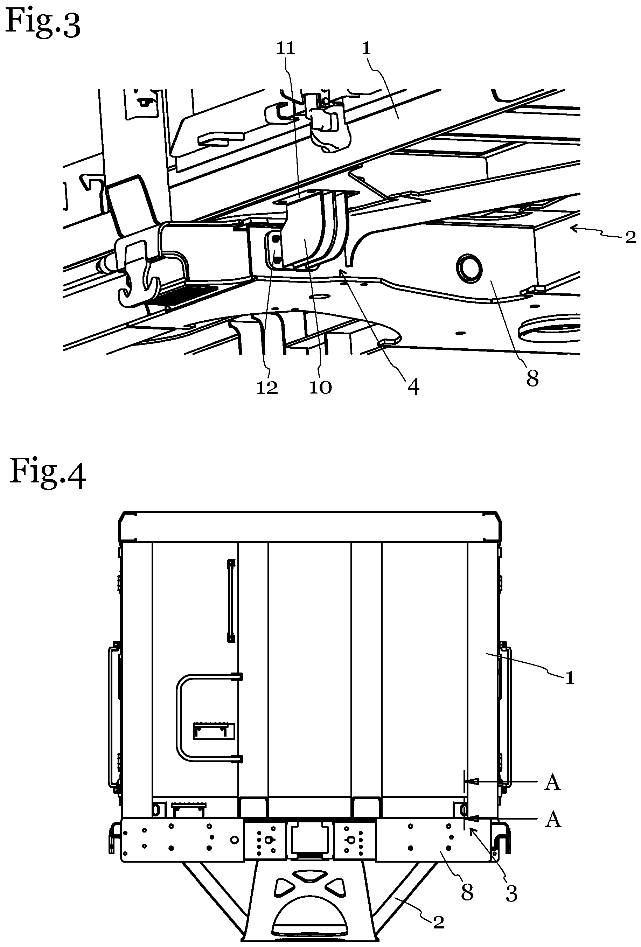

Fig. 3 zeigt eine schematische dreidimensionale Ansicht des erfindungsgemäßen zweiten Koppelelements 4, das an einem Fahrzeugaufbau 1 befestigt ist und mit einem Hauptquerträger 8 eines Untergestells 2 in Fahrtrichtung zusammenwirkt. Das erste Koppelelement 3 ist in dieser Ansicht nicht dargestellt. Es ist ersichtlich, dass das zweite Koppelelement 4 als Anschlagkonsole 10 ausgeführt ist, die im Wesentlichen einen 90°-Winkel realisiert, der an seinem oberen Ende über eine Befestigungsplatte 11 verfügt, die an der Unterseite des Fahrzeugaufbaus 1 befestigt, beispielsweise angeschraubt, ist. Am anderen Ende verfügt das die Anschlagkonsole 10 über eine Anschlagplatte 12. Die Anschlagplatte 12 ist nicht mit dem Untergestell 2 befestigt, sondern wirkt lediglich formschlüssig mit einem Anschlag 14 am Hauptquerträger 8 zusammen, um eine Bewegung des Fahrzeugaufbaus 1 in Fahrtrichtung zu begrenzen.

Ebenfalls dargestellt ist eine Schulter 17, die am Hauptquerträger 8 angeordnet ist. Die Schulter 17 erstreckt sich in Fahrtrichtung derart nach hinten, dass einer Entfernung der Anschlagkonsole 10 bzw. des Fahrzeugaufbaus 1 nach oben entgegengewirkt wird.

Aufgrund der Schulter 17 und des (nicht dargestellten) ersten Koppelelements 3 lässt sich der Fahrzeugaufbau 1 erst dann vom Untergestell 2 entfernen, wenn die Anschlagkonsole 10 demontiert ist.

Fig. 4 zeigt eine schematische Ansicht eines Fahrzeugaufbaus 1 mit einem Untergestell 2, beispielsweise einem Containertragwagen, von vorne. Dargestellt ist der Hauptquerträger 8 und, lediglich schematisch angedeutet, die Position des ersten Koppelelements 3. Wie ersichtlich ist, befindet sich das erste Koppelelement 3 hinter der Außenwand des Fahrzeugaufbaus 1, sodass es von der Seite nicht sichtbar ist. Das zweite Koppelelement 4 ist in dieser Ansicht nicht gezeigt.

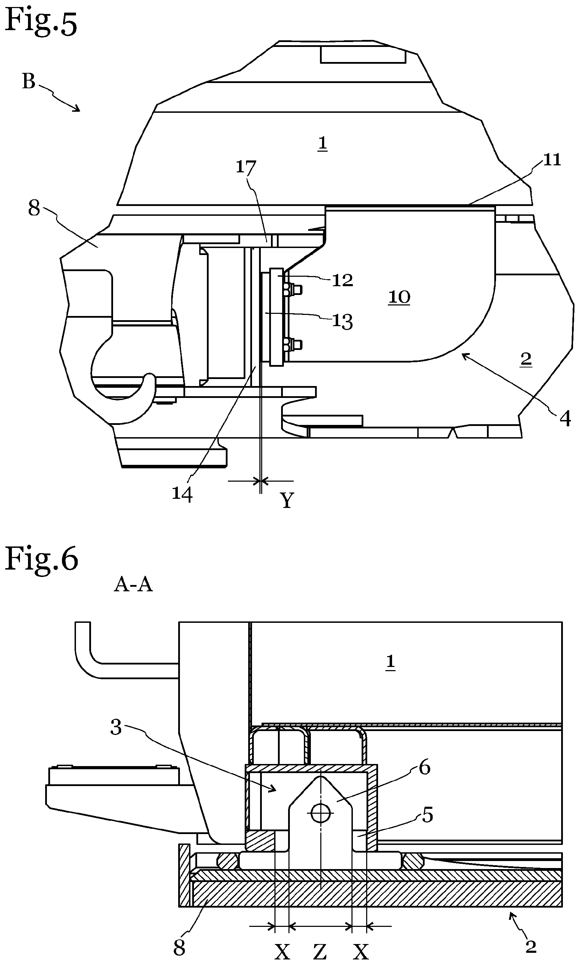

Fig. 5 zeigt eine schematische Ansicht des Details B aus Fig. 2, welches das zweite Koppelelement 4 umfassend die Anschlagkonsole 10 im Detail zeigt. Die Anschlagkonsole 10 ist über ihre Befestigungsplatte 11 am Fahrzeugaufbau 1 befestigt. Am Untergestell 2 befindet sich ein Hauptquerträger 8 mit einem Anschlag 14. Oberhalb des Anschlags 14 ist eine Schulter 17 angeordnet. Die Anschlagkonsole 10 ist als im Wesentlichen 90°-Winkel ausgeführt. An dem, dem Hauptquerträger 8 zugewandten Ende der Anschlagkonsole 10 verfügt diese über eine Anschlagplatte 12.

An der Anschlagplatte 12 ist eine Distanzplatte 13 angeschraubt. Die Distanzplatte 13 dient dazu, den Abstand Y zwischen der Anschlagkonsole 10 und dem Anschlag 14 zu definieren. Im dargestellten Beispiel kann sich die Anschlagkonsole 10 und somit der Fahrzeugaufbau 1 nur um das geringe Spiel Y in Fahrtrichtung bewegen, bevor die Distanzplatte 13 auf den Anschlag 14 trifft. Die Schulter 17 erstreckt sich um einen wesentlich größeren Abstand entgegen die Fahrtrichtung, um das vertikale Entfernen der Anschlagkonsole 10 bzw. des Fahrzeugaufbaus 1 zu verhindern bzw. zu behindern.

Fig. 6 zeigt eine schematische Ansicht des Schnitts A-A aus Fig. 4. Gezeigt ist das erste Koppelelement 3 in einer schematischen Schnittdarstellung. Das erste Koppelelement 3 umfasst einen Zapfen 6, der am Hauptquerträger 8 angeordnet ist. Der Zapfen hat einen im Wesentlichen kreisförmigen Querschnitt und ist nach oben hin mit reduziertem Querschnitt ausgeführt, um das Aufsetzen des Fahrzeugaufbaus 1 auf das Untergestell 2 zu erleichtern. An der Unterseite des Fahrzeugaufbaus 1 befindet sich eine Ausnehmung 5 oder Kammer zur Aufnahme des Zapfens 6.

Die Ausnehmung 5 kann ebenfalls einen im Wesentlichen kreisförmigen Querschnitt aufweisen. In vertikaler Richtung ist die Ausnehmung 5 bzw. die gebildete Kammer ausreichend, um den Zapfen 6 gänzlich aufnehmen zu können. Die Ausnehmung 5 ist deutlich größer als der Zapfen 6. Im vorliegenden Beispiel beträgt der Durchmesser der Zapfen Z, und die Ausnehmung hat eine Größe von etwa Z + 2X. Im dargestellten Ausführungsbeispiel beträgt X etwa ein Viertel des Durchmessers des Zapfens 6, es sind aber natürlich auch andere Abmessungen erfindungsgemäß vorgesehen.

Das in Fig. 5 dargestellte Spiel Y zwischen der Anschlagkonsole 10 und dem Anschlag 14 ist wesentlich geringer als der Abstand X des Zapfens 6 in der Ausnehmung 5. Dadurch wird sichergestellt, dass der Fahrzeugaufbau 1 bei einer Bewegung in Fahrtrichtung (oder entgegengesetzt zur Fahrtrichtung, bei entsprechende Ausführung der Koppelelemente am entgegengesetzten Ende des Schienenfahrzeugs) nicht die Zapfen 6 belastet, sondern diese Längskräfte über die Anschlagkonsole 10 abgeleitet werden.

Auch die in Fig. 5 dargestellte Schulter 17 erstreckt sich um einen Abstand, der größer ist, als 2Y, und vorzugsweise größer als X + Y über den Anschlag 14 hinweg, um sicherzustellen, dass auch bei einer Verschiebung des Fahrzeugaufbaus entgegen die Fahrtrichtung die Anschlagkonsole 10 nicht vertikal nach oben entfernt werden kann.

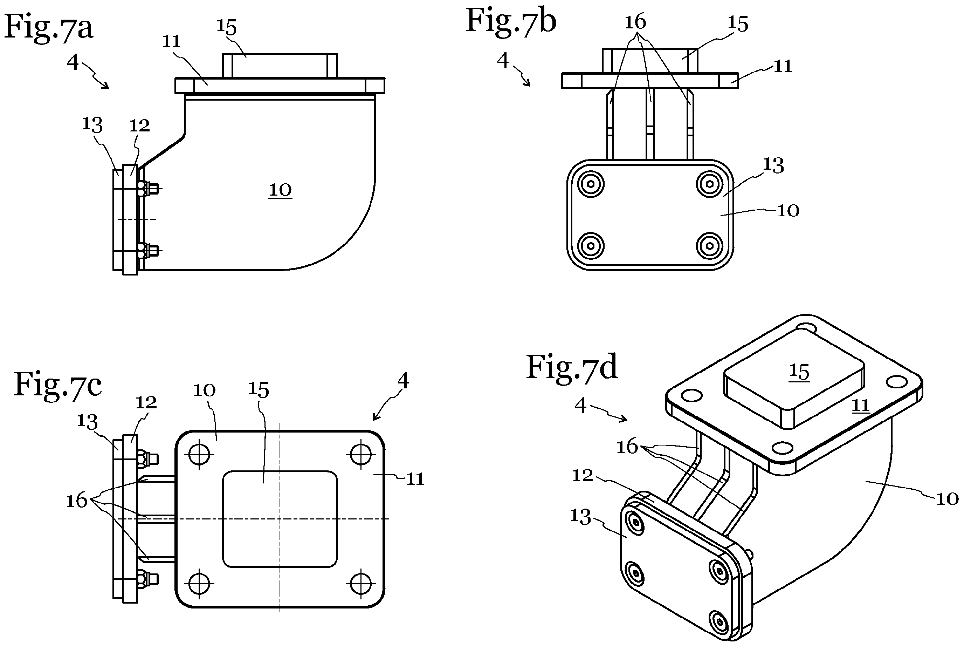

Fig. 7a - 7d zeigen schematische Ansichten des erfindungsgemäßen zweiten Koppelelements 4. Dieses umfasst eine Anschlagkonsole 10, die als ein im Wesentlichen 90°-Winkeleisen ausgeführt ist. An einem Ende der Anschlagkonsole 10 befindet sich eine Befestigungsplatte 11. Diese ist im Wesentlichen rechtwinkelig oder quadratisch. Auf der Befestigungsplatte 11 ist ein Formteil 15 angeordnet, der zur korrekten Positionierung der Befestigungsplatte 11 an der Unterseite des Fahrzeugaufbaus 1 dient. Die Befestigungsplatte 11 weist die Form eines im Wesentlichen rechtwinkeligen Flansches mit Befestigungsbohrungen auf.

Am anderen Ende der Anschlagkonsole 10 befindet sich eine Anschlagplatte 12, auf die eine Distanzplatte 13 geschraubt ist. Die Distanzplatte 13 ist über Schrauben und Muttern mit der Anschlagplatte 12 fest verbunden, es können aber auch andere Verbindungsmöglichkeiten vorgesehen sein.

Im vorliegenden Beispiel kann die Distanzplatte 13 nur von außen, also bei demontierter Anschlagkonsole 10 entfernt werden, da die Befestigungsschrauben in gekammerten Bohrungen der Distanzplatte 13 eingeführt sind. Es sind jedoch auch Ausführungsbeispiele vorgesehen, bei denen die Distanzplatte 13 auch von der Seite der Befestigungsplatte 11 gelöst werden kann, und auch eine gänzlich andere Verbindung der Distanzplatte 13 mit der Anschlagplatte 11 kann vorgesehen sein.

Die Distanzplatte 13 soll einen definierten Abstand zwischen dem Anschlag 14 des Hauptquerträgers 8 oder des Querträgers 7 und der Anschlagkonsole 10 bilden, und es kann in manchen Ausführungsbeispielen erwünscht sein, die Distanzplatte 13 zu wechseln, während es in anderen Ausführungsbeispielen erwünscht sein kann, die Distanzplatte 13 möglichst unverändert zu lassen.

Die im Wesentlichen rechtwinkelige Verbindung der Befestigungsplatte 11 mit der Anschlagplatte 12 wird über mehrere, im vorliegenden Beispiel drei, Rippen 16 gebildet. Die Rippen 16 können über querverlaufende Verstärkungselemente verfügen.

Sämtliche Bestandteile der Anschlagkonsole 10 können aus Eisen, Gusseisen oder Stahl gefertigt sein.

### Bezugszeichenliste

- 1: Fahrzeugaufbau
- 2: Untergestell
- 3: Erstes Koppelelement
- 4: Zweites Koppelelement
- 5: Ausnehmung
- 6: Zapfen
- 7: Querträger
- 8: Hauptquerträger
- 9: Fahrgestell
- 10: Anschlagkonsole
- 11: Befestigungsplatte
- 12: Anschlagplatte
- 13: Distanzplatte
- 14: Anschlag
- 15: Formteil
- 16: Rippen
- 17: Schulter

## Patentansprüche

1. Schnittstelle zur Verbindung eines Fahrzeugaufbaus (1) mit einem Untergestell (2) eines Schienenfahrzeugs, umfassend zumindest ein erstes Koppelelement (3), das zur Ableitung von im Wesentlichen normal zur Fahrtrichtung verlaufenden Kräften ausgeführt ist, wobei zumindest ein zweites Koppelelement (4) vorgesehen ist, das zur Ableitung von im Wesentlichen parallel zur Fahrtrichtung verlaufenden Kräften ausgeführt ist,
**dadurch gekennzeichnet, dass**
das zweite Koppelelement (4) eine vorzugsweise einstückige Anschlagkonsole (10) mit einer Befestigungsplatte (11) und einer im Wesentlichen 90° dazu orientierten Anschlagplatte (12) umfasst, wobei die Befestigungsplatte (11) zur lösbaren Befestigung an der Unterseite des Fahrzeugaufbaus (1) ausgeführt ist, und die Anschlagplatte (12) dazu ausgeführt ist, sich an einem Anschlag (14) eines Querträgers (7), vorzugsweise eines Hauptquerträgers (8) im Bereich des Fahrgestells (9) des Untergestells (2), abzustützen.

2. Schnittstelle nach Anspruch 1, **dadurch gekennzeichnet, dass** das erste Koppelelement (3) einen im Wesentlichen normal zur Fahrtrichtung, vorzugsweise vertikal vom Untergestell (2) nach oben gerichteten, zum Eingriff in eine Ausnehmung (5) an der Unterseite des Fahrzeugaufbaus (1) ausgeführten Zapfen (6) umfasst.

3. Schnittstelle nach Anspruch 2, **dadurch gekennzeichnet, dass** der Zapfen (6) zur Anordnung an einem Querträger (7), vorzugsweise an einem Hauptquerträger (8) im Bereich eines Fahrgestells (9), des Untergestells (2) vorgesehen ist.

4. Schnittstelle nach einem der Ansprüche 1 bis 3, **dadurch gekennzeichnet, dass** an der Anschlagplatte (12) eine Distanzplatte (13) zur Einstellung eines definierten Abstands Y zwischen der Anschlagkonsole (10) und dem Untergestell (2) angeordnet ist.

5. Schnittstelle nach Anspruch 4, **dadurch gekennzeichnet, dass** die Distanzplatte (13) derart an der Anschlagplatte (12) befestigt, insbesondere angeschraubt, angesteckt oder eingeschoben, ist, dass sie auch dann entfernt oder getauscht werden kann, wenn die Befestigungsplatte (11) an der Unterseite des Fahrzeugaufbaus befestigt ist und die Anschlagplatte (12) unmittelbar am Anschlag (14) anliegt.

6. Schnittstelle nach einem der Ansprüche 1 bis 5, **dadurch gekennzeichnet, dass** an der Befestigungsplatte (11) ein Formteil (15) zum Einsetzen in eine Ausnehmung an der Unterseite des Fahrzeugaufbaus (1) zum Positionieren der Anschlagkonsole (10) vorgesehen ist.

7. Schnittstelle nach einem der Ansprüche 1 bis 6, **dadurch gekennzeichnet, dass** die Befestigungsplatte (11) und die Anschlagplatte (12) über eine Vielzahl, vorzugsweise drei, im Wesentlichen rechtwinkelig geformte Bleche, Lamellen oder Rippen (16) miteinander verbunden sind.

8. Anordnung umfassend einen Fahrzeugaufbau (1), ein Untergestell (2) mit zumindest einem Fahrgestell (9), und zumindest eine Schnittstelle nach einem der Ansprüche 1 bis 7.

9. Anordnung nach Anspruch 8, umfassend eine Schnittstelle nach einem der Ansprüche 2 bis 7, **dadurch gekennzeichnet, dass** die Ausnehmung (5) am Fahrzeugaufbau (1) zur Aufnahme des Zapfens (6) in Fahrtrichtung eine größere Abmessung als der Zapfen (6) aufweist, sodass im Betrieb zumindest parallel zur Fahrtrichtung ein Spiel X zur Bewegung des Zapfens (6) in der Ausnehmung (5) in Fahrtrichtung verbleibt.

10. Anordnung nach Anspruch 9, wobei die Schnittstelle nach einem der Ansprüche 4 bis 7 ausgebildet ist, **dadurch gekennzeichnet, dass** der Abstand Y zwischen der Anschlagkonsole (10) und dem Untergestell (2) geringer ist als das Spiel X zur Bewegung des Zapfens (6) in der Ausnehmung (5) an der Unterseite des Fahrzeugaufbaus (1).

11. Anordnung nach Anspruch 10, **dadurch gekennzeichnet, dass** am Querträger (7) oder am Hauptquerträger (8) eine Schulter (17) vorgesehen ist, welche den Anschlag (14) um mehr als den Abstand X + Y überragt, um einer Entfernung des zweiten Koppelelements (4) in vertikaler Richtung entgegenzuwirken.

12. Anordnung nach einem der Ansprüche 8 bis 11, **dadurch gekennzeichnet, dass** eine Vielzahl von Schnittstellen vorgesehen sein, wobei die Schnittstellen jeweils im Bereich eines Fahrgestells (9) des Untergestells (2) angeordnet sind.

13. Anordnung nach Anspruch 12, **dadurch gekennzeichnet, dass** das Untergestell (2) zwei Hauptquerträger (8) mit jeweils zwei Fahrgestellen (9) umfasst, wobei an jedem Hauptquerträger (8) jeweils im Bereich des Fahrgestells (9) eine Schnittstelle nach einem der Ansprüche 1 bis 12 angeordnet ist.

## Claims

1. An interface for connecting a vehicle structure (1) to an chassis (2) of a rail vehicle, comprising at least one first coupling element (3) which is configured to dissipate forces running substantially normally to the direction of travel, wherein at least one second coupling element (4) is provided which is configured to dissipate forces running substantially parallel to the direction of travel,
**characterised in that**
the second coupling element (4) comprises a preferably integral stop bracket (10) with a fastening plate (11) and a stop plate (12) oriented substantially 90° thereto, wherein the fastening plate (11) is designed for removable fastening to the underside of the vehicle structure (1),
and the stop plate (12) is designed to be supported on a stop (14) of a cross member (7), preferably a main cross member (8) in the region of the bogie (9) of the chassis (2).

2. The interface according to claim 1, **characterised in that** the first coupling element (3) comprises a trunnion (6) directed substantially normally to the direction of travel, preferably vertically upwards from the chassis (2), designed for engagement in a recess (5) on the underside of the vehicle structure (1).

3. The interface according to claim 2, **characterised in that** the trunnion (6) is provided for arrangement on a cross member (7), preferably on a main cross member (8) in the region of a bogie (9), of the chassis (2).

4. The interface according to one of claims 1 to 3, **characterised in that** a spacer plate (13) for setting a defined distance Y between the stop bracket (10) and the chassis (2) is arranged on the stop plate (12).

5. The interface according to claim 4, **characterised in that** the spacer plate (13) is fastened to the stop plate (12), in particular screwed on, plugged in or pushed in, in such a way that it may be removed or replaced even if the fastening plate (11) is fastened to the underside of the vehicle structure and the stop plate (12) rests directly against the stop (14).

6. The interface according to one of claims 1 to 5, **characterised in that** a moulding (15) is provided on the fastening plate (11) for insertion into a recess on the underside of the vehicle structure (1) for positioning the stop bracket (10).

7. The interface according to one of claims 1 to 6, **characterised in that** the fastening plate (11) and the stop plate (12) are interconnected by a plurality, preferably three, substantially rectangular shaped plates, lamellas or fins (16).

8. An arrangement comprising a vehicle structure (1), an chassis (2) with at least one bogie (9), and at least one interface according to one of claims 1 to 7.

9. The arrangement according to claim 8, comprising an interface according to one of claims 2 to 7, **characterised in that** the recess (5) on the vehicle structure (1) for receiving the trunnion (6) in the direction of travel has a larger dimension than the trunnion (6), so that in operation a clearance X remains at least parallel to the direction of travel for movement of the trunnion (6) in the recess (5) in the direction of travel.

10. The arrangement according to claim 9, wherein the interface is formed according to one of claims 4 to 7, **characterised in that** the distance Y between the stop bracket (10) and the chassis (2) is less than the clearance X for movement of the trunnion (6) in the recess (5) on the underside of the vehicle structure (1).

11. The arrangement according to claim 10, **characterised in that** a shoulder (17) is provided on the cross member (7) or on the main cross member (8) which projects beyond the stop (14) by more than the distance X + Y in order to counteract a removal of the second coupling element (4) in the vertical direction.

12. The arrangement according to one of claims 8 to 11, **characterised in that** a plurality of interfaces are provided, the interfaces each being arranged in the region of a bogie (9) of the chassis (2).

13. The arrangement according to claim 12, **characterised in that** the chassis (2) comprises two main cross members (8) each with two bogies (9), wherein an interface according to one of claims 1 to 12 is arranged on each main cross member (8) in the region of the bogie (9) in each case.

## Revendications

1. Interface pour relier une caisse de véhicule (1) à un châssis (2) d'un véhicule ferroviaire, comprenant au moins un premier élément de couplage (3) qui est réalisé pour dissiper des forces s'étendant sensiblement de manière normale à la direction de déplacement, dans laquelle au moins un deuxième élément de couplage (4) est prévu, qui est réalisé pour dissiper des forces s'étendant sensiblement de manière parallèle à la direction de déplacement,
**caractérisée en ce que**
le deuxième élément de couplage (4) comprend une console de butée (10), de préférence monobloc, avec une plaque de fixation (11) et une plaque de butée (12) orientée sensiblement à 90° par rapport à celle-ci, la plaque de fixation (11) étant réalisée pour être fixée de manière amovible sur la face inférieure de la caisse de véhicule (1),
et la plaque de butée (12) est conçue pour s'appuyer sur une butée (14) d'une traverse (7), de préférence d'une traverse principale (8) dans la zone du bogie (9) du châssis (2).

2. Interface selon la revendication 1, **caractérisée en ce que** le premier élément de couplage (3) comprend un tenon (6) orienté vers le haut, sensiblement de manière normale à la direction de déplacement, de préférence verticalement par rapport au châssis (2), et conçu pour s'engager dans un évidement (5) sur la face inférieure de la caisse de véhicule (1).

3. Interface selon la revendication 2, **caractérisée en ce que** le tenon (6) est prévu pour être disposé sur une traverse (7), de préférence sur une traverse principale (8) dans la zone d'un bogie (9), du châssis (2).

4. Interface selon l'une des revendications 1 à 3, **caractérisée en ce qu'**une plaque d'écartement (13) est disposée sur la plaque de butée (12) pour régler une distance Y définie entre la console de butée (10) et le châssis (2).

5. Interface selon la revendication 4, **caractérisée en ce que** la plaque d'écartement (13) est fixée, en particulier vissée, enfichée ou insérée, sur la plaque de butée (12) de telle sorte qu'elle peut être retirée ou remplacée même lorsque la plaque de fixation (11) est fixée sur la face inférieure de la caisse de véhicule et que la plaque de butée (12) est directement en contact avec la butée (14).

6. Interface selon l'une des revendications 1 à 5, **caractérisée en ce qu'**une pièce moulée (15) est prévue sur la plaque de fixation (11) pour être introduite dans un évidement sur la face inférieure de la caisse de véhicule (1) pour positionner la console de butée (10).

7. Interface selon l'une des revendications 1 à 6, **caractérisée en ce que** la plaque de fixation (11) et la plaque de butée (12) sont reliées entre elles par une pluralité, de préférence trois, de tôles, lamelles ou nervures (16) de forme sensiblement rectangulaire.

8. Arrangement comprenant une caisse de véhicule (1), un châssis (2) comprenant au moins un bogie (9), et au moins une interface selon l'une des revendications 1 à 7.

9. Arrangement selon la revendication 8, comprenant une interface selon l'une des revendications 2 à 7, **caractérisé en ce que** l'évidement (5) sur la caisse de véhicule (1) destiné à recevoir le tenon (6) dans la direction de déplacement présente une dimension supérieure à celle du tenon (6), de sorte qu'en fonctionnement, au moins parallèlement à la direction de déplacement, il subsiste un jeu X pour le déplacement du tenon (6) dans l'évidement (5) dans la direction de déplacement.

10. Arrangement selon la revendication 9, dans lequel l'interface est réalisée selon l'une des revendications 4 à 7, **caractérisé en ce que** la distance Y entre la console de butée (10) et le châssis (2) est inférieure au jeu X pour le déplacement du tenon (6) dans l'évidement (5) sur la face inférieure de la caisse de véhicule (1).

11. Arrangement selon la revendication 10, **caractérisé en ce qu'**il est prévu sur la traverse (7) ou sur la traverse principale (8) un épaulement (17) qui dépasse la butée (14) de plus de la distance X + Y pour s'opposer à un enlèvement du deuxième élément de couplage (4) dans une direction verticale.

12. Arrangement selon l'une des revendications 8 à 11, **caractérisé en ce qu'**il est prévu une pluralité d'interfaces, les interfaces étant disposées chacune dans la zone d'un bogie (9) du châssis (2).

13. Arrangement selon la revendication 12, **caractérisé en ce que** le châssis (2) comprend deux traverses principales (8) avec respectivement deux châssis (9), une interface selon l'une des revendications 1 à 12 étant disposée sur chaque traverse principale (8) respectivement dans la zone du bogie (9).
